Europäisches Patentamt

European Patent Office

Office européen des brevets

(19)

(11) Veröffentlichungsnummer: **0 025 158**
**A1**

(12) **EUROPÄISCHE PATENTANMELDUNG**

(21) Anmeldenummer: 80105034.5

(22) Anmeldetag: 25.08.80

(51) Int. Cl.³: **G 03 B 17/30**

(30) Priorität: 05.09.79 DE 2935774

(43) Veröffentlichungstag der Anmeldung:
18.03.81 Patentblatt 81/11

(84) Benannte Vertragsstaaten:
CH DE FR GB IT LI

(71) Anmelder: **AGFA-GEVAERT Aktiengesellschaft**
**Patentabteilung**
**D-5090 Leverkusen 1(DE)**

(72) Erfinder: **Kluczynski, Achim**
**Im Eichholz 6**
**D-5063 Overath(DE)**

(72) Erfinder: **Altmann, Erik**
**Duesterweg 38**
**D-4330 Mühlheim/Ruhr(DE)**

(54) Filmkassette für Rollfilme.

(57) Eine Filmkassette für Rollfilme, insbesondere für Kleinbildfilme, besteht aus einem zylindrischen Mantel als Filmvorratskammer, einem daran angeformten Kassettenmaul und einer Filmspule. Mindestens ein Mantelrand (6) des Mantelzylinders (1) ist zur Erhöhung der Lichtsicherheit nach innen umgebördelt und das Kassettenmaul (3, 15) besitzt an den seitlichen Maulenden abgewinkelte Streifen (9) zur Maulweitenbegrenzung. Mindestens ein Abschlußteil (5) ist an dem Kassettenmantel (1) angeformt und überlappt den umgeformten Mantelrand (6) und verschließt das Kassettenmaul (3, 15) seitlich.

FIG. 1

EP 0 025 158 A1

Croydon Printing Company Ltd.

AGFA-GEVAERT
AKTIENGESELLSCHAFT          5090 Leverkusen, Bayerwerk
Patentabteilung            HRS/Kü-c

## Filmkassette für Rollfilme

Die Erfindung beinhaltet eine Filmkassette für Rollfilme, insbesondere für Kleinbildfilme und besteht aus einem zylindrischen Mantel als Filmvorratskammer, einem daran angeformten Kassettenmaul und einer Filmspule.

Für lichtempfindliche Filmmaterialien werden unterschiedliche Filmkassetten für verschiedenartige Filmsysteme, wie zum Beispiel für Schmalfilme oder Kleinbildfilme verwendet. In diesen Kassetten wird das Filmmaterial auf Spulen gewickelt, die Spulen mit den aufgewickelten Filmen in die Kassette eingebracht und die Kassetten anschließend lichtsicher verschlossen. Die Kassetten weisen Öffnungen auf, durch welche das Filmmaterial aus- bzw. eingespult werden kann. Es wird zwischen Laufbild- und Stehbildkassetten unterschieden. Bei der hier zu behandelnden Kassettenart wird ausschließlich auf eine Rollfilmkassette für Stehbildfilm und insbesondere für das Kleinbildfilmsystem für 35 mm breites Filmmaterial eingegangen.

AG 1668

Üblicherweise bestehen diese Kassetten für Kleinbildfilme aus einem rollierten, lackierten Blechmantel mit einem als Kassettenmaul ausgebildeten Schlitz. Der Blechmantel wird an seinen beiden Enden durch Deckel verschlossen, nachdem eine Spule mit Film eingeführt worden ist. In das Kassettenmaul werden zur Lichtabdichtung Abdichtmaterialien zum Beispiel Plüschstreifen eingeklebt. Die Spulen werden mit Zapfen in dem Deckel beidseitig so gelagert, daß eine möglichst gute Lichtabdichtung erfolgt. Diese Kassetten bestehen demnach aus einer Spule, 3 Teilen, sowie den beiden einzuklebenden Plüschstreifen. Weiterhin haben diese Kassetten den Nachteil, daß sich die Abdichtung des Kassettenmaules, insbesondere an den beiden deckelseitigen Enden, nur unvollkommen ausführen läßt. Durch das Zusammenwirken verschiedener Durchmesser von Kassettenmantel und Deckeln und den daran angebrachten Verschlußvorrichtungen wie Sicken, Nocken, Stiften, treten relativ große Maßunterschiede in dem Manteldurchmesser und somit in der Maulweite, des Ein- und Ausfädelschlitzes auf. Als Folge hiervon wird bei zu weitem Maul eine schlechte Lichtsicherheit und bei zu engem Maul eine zu hohe Auszugskraft zum Herausziehen des Filmes bewirkt, wodurch in beiden Fällen der Film beschädigt oder gar unbrauchbar wird. Die Deckel haben die Doppelfunktion, den eingelegten Film auf der Spule vor Licht zu schützen und gleichzeitig die zylindrische

AG 1668

- 3 -

Form des Mantel zu gewährleisten. Die auf dem Zylindermantel eingerasteten Deckel können sich leicht lösen und abspringen, wobei Licht in die Kassette fällt und das Filmmaterial durch Belichtung unbrauchbar wird.

Weniger Teile besitzt eine Rollfilmkassette, wie sie zum Beispiel in der DE-OS 2 612 352 beschrieben ist.

Die Kassette ist aus Kunststoff hergestellt und der zylindrische Mantel ist mit einem Boden aus einem Stück gefertigt, sodaß nur noch ein Deckel aufgesetzt werden muß. Der Deckel rastet über federnde Noppen in das zylindrische Mantelteil ein. In einer besonderen Ausführungsform kann der eingerastete Deckel zusätzlich mit dem Kassettenunterteil verschweißt werden. Wenn auch ein Abspringen des Deckels so vermieden wird, bestehen auf der Deckelseite immer noch die durch die maßlichen Toleranzen von Deckel und Kassettenmantel bedingten Schwierigkeiten der Mantelabdichtung. Weitere Schwierigkeiten entstehen bei dem Einbringen der Abdichtungsstreifen in den Mantelschlitz, der an seinem unteren Ende durch den angespritzen Boden zusammengehalten wird und so ein exaktes Einleimen oder Einschweißen erschwert.

AG 1668

In der DE-PS 1 258 257 wird eine Filmpatrone beschrieben, die aus Blech oder Kunststoff hergestellt ist und einen Mantel mit Boden, ähnlich der vorher beschriebenen Kunststoffkassette, besitzt. Statt eines Deckels dient der eine, verstärkt ausgeführte, Spulenflausch, der sich in den in den Kassettenmantel eingeprägten Rillen dreht. Zwei Rillen im Kassettenmantel und 2 auf dem Umfang des Spulenflansches angespritzte Rippen übernehmen statt des Deckels die Abdichtung des Kasetteninneren gegen Lichteinfall. Da bereits ein leichtes Auseinanderbiegen des Mantels an der offenen Seite genügt, um den Film in der Kassette zu belichten, hat sich diese Kassette auf dem Markt nicht durchgesetzt.

Der Erfindung liegt die Aufgabe zugrunde eine Kassettenausführung zu finden, die unter Berücksichtigung der festgelegten Normen in Bezug auf Form und Anschlußmaße preiswert in der Herstellung ist, eine gute Lichtsicherheit bei niedrigen Aus- und Einspulkräften besitzt, automatengerecht und universell für Kleinbildkameras verwendbar ist.

Erfindungsgemäß wurde die Aufgabe dadurch gelöst, daß mindestens ein Mantelrand des Mantelzylinders zur Erhöhung der Lichtsicherheit der Filmvorratskammer nach innen umgeformt ist, daß das Kassettenmaul an den seitlichen Maulenden abgewinkelte Streifen als Maulweitenbegrenzung besitzt und daß mindestens ein Abschlußteil an den Kassettenmantel angeformt ist, welches den umgeformten Mantelrand überlappt und das Kassettenmaul seitlich verschließt.

Eine besonders vorteilhafte und preiswerte Ausführungsform zeichnet sich dadurch aus, daß beide Mantelränder bei eingelegter Spule nach innen umgeformt sind.

Überraschenderweise zeigt es sich, daß diese Kassette, die nur noch aus 2 Teilen, dem Kassettenmantel und der Filmspule, besteht und daher sehr preiswert in der Herstellung und ca. 30% billiger als derzeitige Kassetten ist, sowohl ausgezeichnete Laufeigenschaften für die Spule in der Kassette als auch eine sehr gute Lichtsicherheit aufweist. Die Lichtsicherheit als auch die guten Aus- und Einfädelwerte für den Film werden durch die Streifen als Maulweitenbegrenzung erreicht, die eine vorwählbare Maulweite zulassen. Das Abschlußteil verhindert ein seitliches Eindringen von Licht in das Maul und versteift die Kassette und die Maulstellung zum Mantel.

Die Kassette kann auch nur auf der einen Seite mit der erfindungsgemäßen Umformung des Kassettenmantels

AG 1668

versehen werden, wobei dann ein Deckel als Verschluß auf der anderen Seite verwendet werden kann.

Eine besonders vorteilhafte Ausbildung zur Vermeidung von Lichteinfall in die Kassette an den
Spulenflauschseiten besteht darin, daß der oder
die Mantelränder koaxial in Richtung zum Innenraum des Mantels verformt sind und Spulen vorgesehen sind, deren Flauschen an ihrem äusseren Umfang einen der konischen Form des Mantelrandes
entsprechenden konischen Bund aufweisen.

Durch diesen konischen Bund an der Spule und der
konischen Verformung des Mantelrandes nach innen
wird die Lichtsicherheit infolge Verlängerung
und Verwinkelung des Lichtweges weiter verbessert.

Zur Stabilitätsverbesserung der Kassette und zur
Erhöhung der Lichtsicherheit wird im Maulbereich
das Abschlußteil mit Sicken versehen.

Zur schonenden Behandlung des Filmes im Bildbereich wird in einer speziellen Ausführungsform
die Unterlippe mit erhabenen Prägungen zur Oberlippe hin versehen, auf welcher der bildfreie
Rand des Filmes gleitet.

Ein Erleichtern des Aus- und Einspulens des
Filmes aus und in die Kassette wird dadurch erreicht, daß eine oder beide Maullippen mit trichterförmigen Abwinklungen versehen sind.

AG 1668

Die Kassette läßt sich sowohl aus Eisenblech,
Alublech oder anderen Metallen oder Metalllegierungen herstellen. Zur Erhöhung der Lichtsicherheit werden die Metallbleche schwarz lackiert.

Ebenso ist eine Herstellung der Kassette aus
einem thermoplastischen lichtsicheren Kunststoff
möglich. Geeignet sind zum Beispiel Polystyrol,
Polyurethan, Celluloseester, Polycarbonat oder
Acrylnitril-butadien-styrol=Copolymere.

Die Erfindung wird nachstehend anhand der Zeichnungen näher erläutert.
Es zeigen:

Figur 1    eine Gesamtansicht der Kassette mit eingelegter Spule

Figur 2    einen vergrößerten Ausschnitt der
           Kassette im Bereich des einen Patronenmaules.

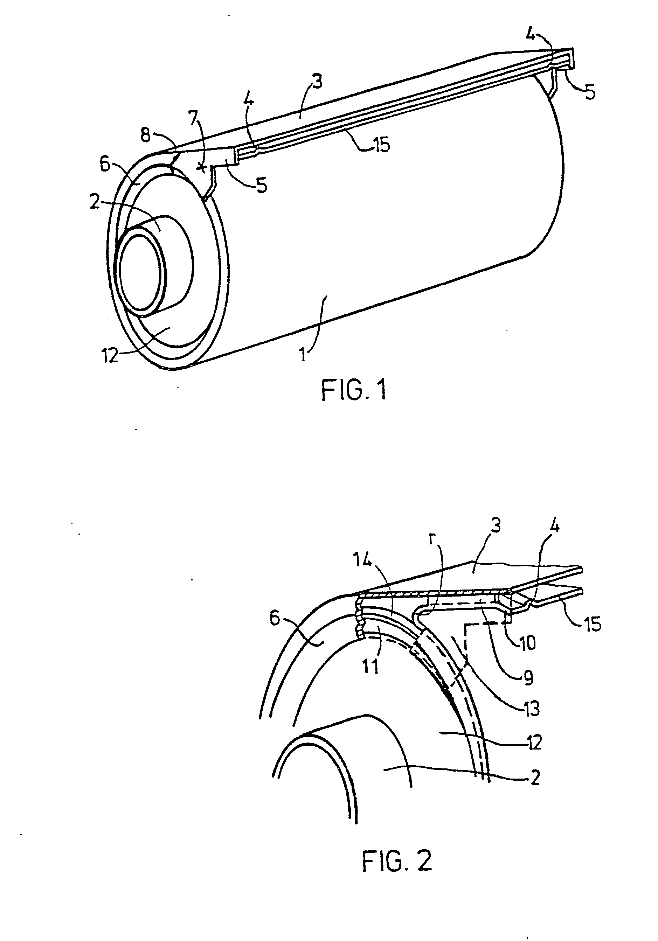

In der Figur 1 ist die komplette Kassette dargestellt,
die nur aus 2 Teilen, dem zylindrischen Mantel 1 und
der eingelegten Spule 2 besteht. Der Mantel 1 wird
aus Blech rolliert oder aus Kunststoff gespritzt
oder geformt. Bei der Herstellung des Mantels 1
wird das Kassettenmaul, bestehend aus Oberlippe 3
und Unterlippe 15, an den Mantel 1 angeformt. Der
Mantel 1 ist länger als die spätere Kassette. Zur

AG 1668

BAD ORIGINAL

lichtsicheren Abdichtung des Innenraumes werden die Ränder 6 des Mantels 1 bei eingelegter Spule 2 zunächst um 90°C radial nach innen und anschließend Konisch in Richtung zum Innenraum der Kassette verformt. In einer anderen Herstellungsart kann auch erst an einer Seite der Kassette der Rand 6 des Mantels 1, wie beschrieben, verformt werden, die Spule 2 eingesetzt und dann der andere Rand 6 des Mantels 1 verformt werden. Es kann auch statt des Verformens des zweiten Randes 6 in bekannter Weise auf einer Seite ein Deckel aufgesetzt werden.

Als Spule 2 werden aus preislichen Gründen meist Kunststoffspulen verwendt, jedoch kann die Kassette auch mit Metallspulen bestückt werden. Besonders geeignet sind Spulen mit Fanghaken, wobei sich der Film, wenn er durch das Kassettenmaul (3,15) eingeschoben wird mit seinen seitlichen oder gesonderten mittig angebrachten Perforationslöchern in Fanghaken der Spule verhakt und von der Spule eingezogen wird. Derartige Spulen mit Fanghaken sind zum Beispiel in der DE-PS 1 190 785 beschrieben, wobei die Fanghaken in einem Schlitz im Holm der Spule angebracht sind. Zum Einfädeln der Filmzunge in den Schlitz der Spule muß der Schlitz der Spule zum Kassettenmaul in eine definierte Stellung gebracht werden.

AG 1668

Vorteilhaft wird eine Außenhakenspule verwendet, die einen Fanghaken auf dem Umfang des Spulenholmes besitzt und auch bei Rotation der Spule einen durch das Maul eingeschobenen Film fängt, gegen Herausspringen sichert und anwickelt. Eine derartige Filmspule ist beispielsweise in der DE-OS 2 745 981 beschrieben.

Die Spulenflausche 12 der Spule 2 (Figur 2) sind zur Erhöhung der Lichtsicherheit an ihrem Umfang mit einem konischen Bund 11 versehen, der in seiner konischen Form der konischen Verformung der Ränder 6 des Kassettenmantels 1 entspricht. Hierdurch wird erreicht, daß das auf den Spulenflansch auftreffende Licht um einen Winkel größer 90°C umgelenkt, zwischen Spulenflausch und Mantelrand geleitet, und dann nochmals um über 90°C umgelenkt nicht ins innere des Kassettenraumes gelangen kann. Sind der Kassettenmantel und die Spule in schwarzer Farbe gehalten, so wird zusätzlich sichergestellt, daß kein Licht von den Seiten in die Kassette eindringen kann, welches zur Belichtung des Filmmaterials führt.

An der Unterlippe 15 des Kassettenmantels sind auf beiden Seiten je ein Streifen 9 freigestanzt, dessen Breite in Achsrichtung so bemessen ist, daß, wenn er nach oben umgeformt ist, er eine Auflage für die Oberlippe 3 bildet und einen definierten Abstand von Oberlippe 3 zu Unterlippe 15 gewährleistet.

AG 1668

- 10 -

Die exakte Einstellungsmöglichkeit der Maulweite erlaubt für weniger empfindliche Filme oder Filme mit einem Vorspann das Kassettenmaul ohne Abdichtungsmaterial, wie eingeklebte Plüsch- oder Samtstreifen, zu belassen. Für hochempfindliche Filme können die Oberlippe 3 und/oder die Unterlippe 15 aber auch mit einem Abdichtungsmaterialstreifen versehen werden.

Zur schonenden Führung des Filmes durch den Spalt zwischen Oberlippe 3 und Unterlippe 15 können an den beiden Enden der Unterlippe 15 im Randbereich nach innen erhabene Gleitflächen 4 wie Sicken oder ins Maul ragende erhabene Flächen angebracht sein, die den Film an den Filmrändern so tragen, daß die Bildfläche des Filmes freigestellt ist und beim Aus- und Einspulen nicht beschädigt wird. Die Oberlippe 3 und/oder die Unterlippe 15 können im vorderen Bereich eine Abwinklung 10 besitzen, die, ähnlich einem Trichter, das Einfädeln des Filmes in die Kassette erleichtert.

An der Oberlippe 3 sind beidseitig Abschlußteile 5 angebracht, welche beim Verformen der Mantelränder 6 das Kassettenmaul (3,15) seitlich verschließen.

Im Bereich 13 (Figur 2) überlappen sich die Mantelränder 6 zur Wahrung der Lichtsicherheit an dieser Stelle. Gleichzeitig wird durch das Abschlußteil 5 die

AG 1668

Stabilität des Kassettenmaules und der Kassette gegen Verformung erhöht. Durch Eindrücken von Sicken 7,8 wird die Stabilität weiterhin verbessert und eine Bewegung der Unterlippe 15 relativ zur Oberlippe 3 verhindert, sowie die zylindrische Form des Kassettenmantels 1 fixiert.

Die radiale Lagerung der Spule 2 beim Auf- und Abspulen des Filmes erfolgt durch Ablaufen des äußeren Flanschdurchmessers 14 der Spule 2 auf der inneren zylindrischen Wand des Kassettenmantels 1.

Der Übergang vom zylindrischen Kassettenmantel 1 in die Unterlippe 15 ist mit einem Radius r versehen, der dem Umlaufen der Spule in diesem Bereich keinen Widerstand entgegensetzt und den Film ohne Beschädigung von der Spule 2 in daß Kassettenmaul 3, 15 leitet, zumal die Sicken 4 sich bis in diesen Bereich ausdehnen können und den Film nur im bildfreien Randbereich führen.

Die beschriebene Kassette zeigt wesentliche Fortschritte gegenüber bisher bekannten Kassettenausführungen. Sie besteht nur aus 2 Teilen, dem Kassettenmantel und der Spule und ist demnach sehr preiswert herstellbar. Die Lichtsicherheit ist durch die konische Einziehung der beiden Kassettenmantelenden und der konischen Ausführung des Bundes am äußeren Spulenflausch seitlich gewährleistet. Die Ausbildung

AG 1668

des Kassettenmaules mit Distanzstreifen an beiden Seiten und den Abschlußteilen läßt eine lichtsichere Ausführung bei gleichzeitigen guten Ein- und Ausfädelwerten für den Film zu. Ein ungewolltes Abspringen von Deckeln und das hierdurch bedingte Unbrauchbarwerden des Filmes durch Vorbelichtung ist ausgeschlossen.

AG 1668

Patentansprüche:

1. Filmkassette für Rollfilme, insbesondere für Kleinbildfilme, bestehend aus einem zylindrischen Mantel als Filmvorratskammer, einem daran angeformten Kassettenmaul und einer Filmspule, dadurch gekennzeichnet, daß mindestens ein Mantelrand (6) des Mantelzylinders (1) zur Erhöhung der Lichtsicherheit der Filmvorratskammer nach innen umgeformt ist, daß das Kassettenmaul (3,15) an den seitlichen Maulenden abgewinkelte Streifen (9) als Maulweitenbegrenzung besitzt und daß mindestens ein Abschlußteil (5) an den Kassettenmantel (1) angeformt ist, welches den umgeformten Mantelrand (6) überlappt und das Kassettenmaul (3,15) seitlich verschließt.

2. Filmkassette nach Anspruch 1, dadurch gekennzeichnet, daß beide Mantelränder (6) bei eingelegter Spule (2) nach innen umgeformt sind.

3. Filmkassette nach Anspruch 1, dadurch gekennzeichnet, daß nur auf einer Seite der Kassette der Mantelrand (6) nach innen umgeformt ist und die andere Seite in bekannter Weise durch einen Deckel verschlossen wird.

AG 1668

4. Filmkassette nach Anspruch 1 bis 3, dadurch gekennzeichnet, daß der oder die Mantelränder (6) konisch in Richtung zum Innenraum des Mantels (1) verformt sind und Spulen (2) vorgesehen sind, deren Flansche (12) an ihrem äußeren Umfang einen der konischen Form des Mantelrandes entsprechenden konischen Bund (11) ausweisen.

5. Filmkassette nach Anspruch 1, dadurch gekennzeichnet, daß zur Stabilisierung der Kassette und zur Erhöhung der Lichtsicherheit im Maulbereich das oder die Abschlußteile (5) mit Sicken (7,8) versehen ist oder sind.

6. Filmkassette nach Anspruch 1, dadurch gekennzeichnet, daß die Unterlippe (15) des Kassettenmaules (3,15) zur Freistellung der Bildflächen der Kleinbildfilme an beiden Seiten erhabene Prägungen (4) besitzt.

7. Filmkassette nach Anspruch 1, dadurch gekennzeichnet, daß an der Vorderkante der Maullippen (3,15) zur Erleichterung des Aus- und Einspulens des Filmes trichterförmige Abwinkelungen (10) vorgesehen sind.

8. Filmkassette nach Anspruch 1, dadurch gekennzeichnet, daß der Mantel (1) aus Metall hergestellt ist.

9. Filmkassette nach Anspruch 1, dadurch gekennzeichnet, daß der Mantel (1) aus lichtundurchlässigem Kunststoff hergestellt ist.

AG 1668

FIG. 1

FIG. 2

Europäisches
Patentamt

EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - B - 1 248 463 (ROLLEI-WERKE)<br>* Spalten 3-5; Spalte 6, Zeilen 1-21; Figuren 1-10 *<br>-- | 1-4 |
| | US - A - 2 172 255 (A. NAGEL)<br>* Seite 1; Spalte 2, Zeilen 5-49; Figuren 1-4 *<br>-- | 1,5 |
| | DE - C - 703 087 (KODAK A.G.)<br>* Seite 2; Figuren 1-5 *<br>-- | 1,5 |
| | US - A - 2 303 173 (B.C. ROEHRL)<br>* Seite 1; Seite 2, Zeilen 1-31; Figuren 1-5 *<br>-- | 1,5,8 |
| D | DE - C - 1 258 257 (AGFA-GEVAERT A.G.)<br>* Spalte 2; Figuren 1,2 *<br>---- | 8,9 |

KLASSIFIKATION DER ANMELDUNG (Int. Cl.³)

G 03 B 17/30

RECHERCHIERTE SACHGEBIETE (Int. Cl.³)

G 03 B 17/30
17/26
G 03 C 3/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentanspruche erstellt.

| Recherchenort | Abschlußdatum der Recherche | Prüfer |
|---|---|---|
| Den Haag | 27-11-1980 | BOEYKENS |